# EUROPEAN PATENT SPECIFICATION

(11) **EP 3 525 328 B1**
(45) Date of publication and mention of the grant of the patent: **01.06.2022**
(21) Application number: 19155921.0
(22) Date of filing: 07.02.2019
(51) Int. Cl.: H02K 15/02, H02K 1/14

(54) **APPARATUS AND METHOD FOR ASSEMBLING THE TEETH THAT CONSTITUTE THE STATOR POLES OF A STATOR**
VORRICHTUNG UND VERFAHREN ZUR MONTAGE DER ZÄHNE, AUS DENEN DIE STATORPOLE EINES STATORS BESTEHEN
APPAREIL ET PROCÉDÉ POUR ASSEMBLER LES DENTS CONSTITUANT LES PÔLES DE STATOR D'UN STATOR

(30) Priority: 09.02.2018 IT 201800002533
(43) Date of publication of application: 14.08.2019
(60) Divisional application: 21162376.4
(73) Proprietor: Marsilli S.p.A., 26012 Castelleone (CR) (IT)
(72) Inventor: PARATI, Gian Battista, 26012 CASTELLEONE CR (IT)
(74) Representative: Modiano, Micaela Nadia

(56) References cited:
- DE-A1-102014 019 763
- JP-A- 2014 187 840
- JP-B2- 6 200 720

## Description

The present invention relates to a method and an apparatus for assembling the teeth that constitute the stator poles of a stator for electric motors.

As is known, the rotors of electric motors normally have a cylindrical shape and comprise a plurality of stator poles formed by teeth arranged along the internal circumference of the cylinder.

For the correct operation of the electric motor, it is important that the teeth are arranged along an exact circumference, i.e., all at the same distance from the longitudinal axis of the stator. A less-than-perfect roundness of the curve defined by the teeth in fact creates an uneven magnetic field which produces an uneven (jerky) rotation of the rotor.

The external roundness of the cylinder instead has no influence on the correct operation of the rotor.

The teeth are normally provided separately and then assembled.

Accordingly, in the field of the production of electric motors, there is the need to assemble the teeth that form the stator poles so that they form an internal circumference that is as precise as possible.

This goal is rendered more difficult by the fact that the teeth often have different tolerances which are due to the preceding machining operations to which they are subjected.

Furthermore, sometimes the teeth have different constructive dimensions which influence the internal roundness.

In the background art, an attempt is made to achieve internal roundness of the stator by acting on the deformation of the material.

In practice, apparatuses for assembling stators of the known type comprise a central support, having the preset diameter, against which the teeth are pressed by a press.

Although this known method is very practical, it is unable to ensure a fully satisfactory precision of the internal roundness.

In particular, the applied pressure generates in the material of the teeth residual stresses which, once the press is released, cause deformations and/or mutual displacements of the teeth, with consequent negative repercussions on the internal roundness.

JP 2014 187840 discloses a method for assembling the teeth that constitute the stator poles of a stator.

JP 6200720 discloses a brushless motor and a method for manufacturing a brushless motor.

DE 10 2014 019763 discloses a device for manufacturing a stator of an electrical machine.

The aim of the present invention is to overcome the limitations of the background art described above, providing an apparatus and a method for the assembly of the teeth that constitute the stator poles of a stator that ensures with greater precision the internal roundness of the stator.

Within this aim, an object of the present invention is to devise a method that allows to assemble the teeth without deforming their material.

Another object of the invention is to devise a method that allows to control the correctness of the assembly with a higher reliability than the background art.

A further object of the invention is to provide an apparatus for performing the method.

This aim, these and other objects which will become better apparent hereinafter, are achieved by an apparatus as defined in claim 1.

Further characteristics and advantages will become better apparent from the description of a preferred but not exclusive embodiment of an apparatus for the assembly of the teeth that constitute the stator poles of a stator, illustrated by way of nonlimiting example with the aid of the accompanying drawings, wherein:
Figure 1 is a sectional view, taken along a vertical plane, of a possible embodiment of the apparatus for assembling the teeth that constitute the stator poles of a stator, according to the invention;
Figure 2 is a top plan view of the apparatus of Figure 1;
Figure 3 is a sectional view, taken along the surface II-II of the apparatus of Figure 1;
Figure 4 is a sectional view, taken along a horizontal plane of the radial expansion device of the apparatus of Figure 1;
Figure 5 is a sectional view, taken along the line V-V of the radial expansion device of Figure 4;
Figure 6 is a perspective view of the radial expansion device of Figure 4;
Figure 7 is a perspective view of a radial compression device of the apparatus of Figure 1;
Figure 8 is a sectional view, taken along the line X-X, of the radial compression device of Figure 7;
Figure 9 is a top view of the radial compression device of Figure 7;

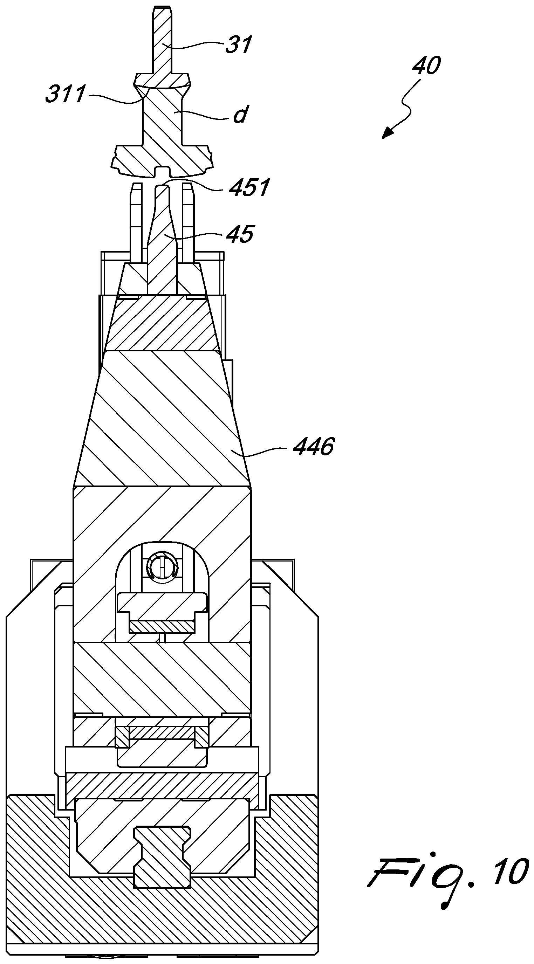

Figure 10 is a sectional view, taken along a horizontal plane, of the radial compression device of Figure 7;
Figures 11 to 19 are views of a sequence of steps of the method for the assembly of the teeth that constitute the stator poles of a stator, according to the invention, performed with the apparatus of Figure 1.

With reference to the figures, the apparatus for assembling the teeth that constitute the stator poles of a stator, designated generally by the reference numeral 1, comprises a supporting structure 20 which is provided with at least one seat 21 for accommodating the teeth d during assembly.

The term "tooth" d references, in a fully general way, any one of the parts that must be mutually assembled during a process for the assembly of a stator. The shape and the dimensions of the teeth d can thus vary according to the type of stator that must be assembled.

In the preferred and illustrated embodiment, the supporting structure 22 comprises a frame 28 which is adapted to hold together the various elements that constitute the apparatus 1 and on which a horizontal resting surface 22 is arranged.

In the illustrated example, the supporting structure 20 is furthermore provided with adjustable feet 23.

The seat 21 has a central axis Y, i.e., the longitudinal axis, which in the preferred and illustrated embodiment is vertical.

Advantageously, the feet 23 can be adjusted so as to ensure the perfect verticality of the central axis Y.

According to the invention, the apparatus 1 comprises a radial expansion device 30 which is arranged at the center of the seat 21, at the central axis Y, and is configured to expand radially with respect to the central axis Y.

The radial expansion device 30 is a device that is capable of imparting to each of the teeth d, in a controlled manner, a mechanical force that is directed toward from the central axis Y outward; the radial expansion device 30 that is present in the preferred embodiment will be described in greater detail hereinafter.

According to the invention, the apparatus 1 comprises furthermore a plurality of radial compression devices 40 which are arranged substantially radially around the radial expansion device 30 and are configured to expand radially toward said central axis Y.

The radial compression devices 40 are devices capable of imparting in a controlled manner a mechanical force, which is directed outward toward the central axis Y, to each one of the teeth d, such as for example presses; the radial compression devices 40 that are present in the preferred embodiment will be described in greater detail hereinafter.

It is useful to clarify that the expression "arranged radially around the radial expansion device 30" means that they are arranged so that the expansion axis is oriented like the radius of a circumference that is centered on the central axis Y.

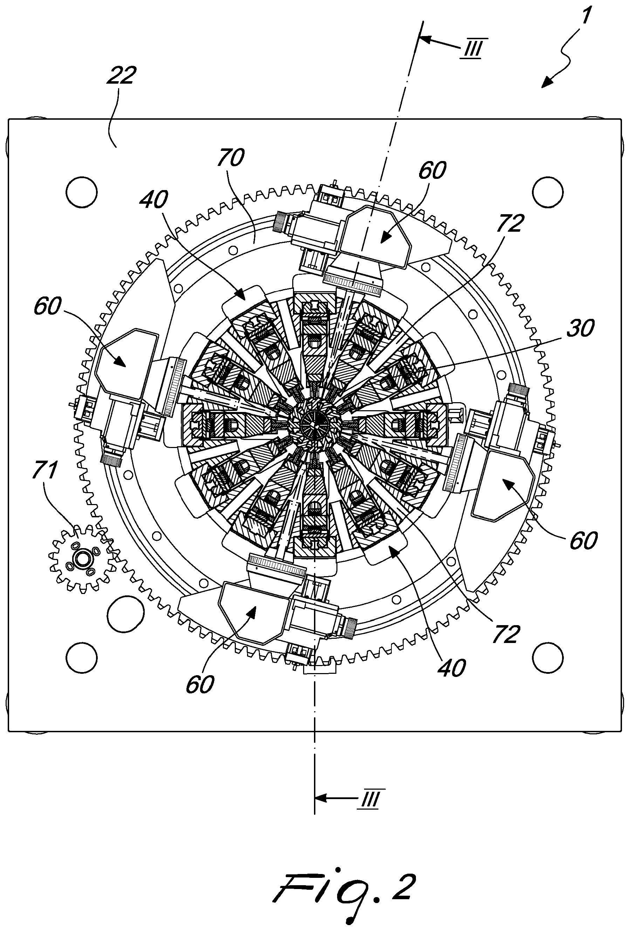

In the illustrated example (see Figure 2), the radial compression devices 40 are arranged along a circumference centered on the central axis Y, all at the same distance from said central axis Y.

In some embodiments, which are not shown, the elements can be arranged equivalently again radially but offset at different distances from the central axis Y.

In any case, the radial expansion device 30 and the radial compression devices 40 form between them a cavity 23 which is adapted to accommodate the teeth d during assembly.

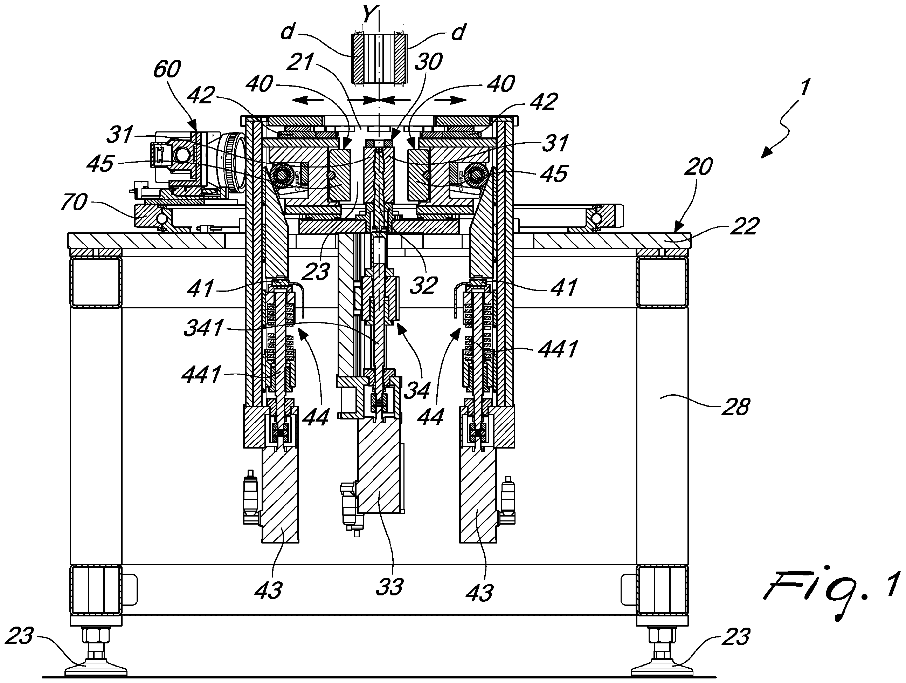

It should be noted, with particular reference to Figures 1 and 2, that a cavity 23 is formed which has substantially an annular cross-section, which is symmetrical with respect to the central axis Y, of which the radial expansion device 30 and the radial compression devices 40 define respectively the internal wall and the external wall.

In practice, the radial expansion device 30 and the radial compression devices 40 are arranged so that the radial expansion of the radial expansion device 30 pushes each tooth d radially away from the central axis Y and the expansion of the radial compression devices 40 pushes said teeth d radially toward the axis Y.

In other words, the radial expansion device 30 and the radial compression devices 40 act in an antagonistic manner on each tooth d, adjusting its distance from the central axis Y.

According to the invention, the expansion of the radial expansion device 30 and the expansion of the radial compression devices 40 are controlled by at least one electronic control unit (not shown), in manners which will become better apparent hereinafter.

It is noted right now that by virtue of these particularities of the invention the radial expansion device 30 and the radial compression devices 40 can act in a coordinated manner on each tooth d, so as to arrange all the teeth d at the same distance from the central axis Y, and thus provide a very precise internal circumference of the rotor S without deforming the teeth d.

The electronic control unit is constituted by one or more programmable electronic devices, which are adapted to control electronically all or part of the components of the apparatus 1 and can comprise one or more control interfaces. For example, the electronic control unit can comprise an electronic device for the control of the radial expansion device 30 and one for the control of each radial compression device 40, which are connected to a single programmable electronic controller.

Preferably, the apparatus 1 also comprises one or more laser emitters 60 configured to perform laser welding on the teeth d once they have been positioned correctly.

According to an optional and advantageous characteristic, the laser emitters 60 are mounted on a base 70 which can rotate about the central axis Y and more precisely are arranged externally with respect to the radial compression devices 40 relative to the central axis Y (i.e., outside the circumference along which the radial compression devices 40 are arranged).

In the illustrated example, the base 70 has the shape of a sprocket and is determined by means of a gear 71, which is actuated by a motor 66.

Furthermore, between each radial compression device 40 and the adjacent radial compression device 40 there is a channel 72 which is adapted to be crossed by a laser beam and is arranged radially toward the central axis Y.

In this manner, by rotating the base 70 it is possible to arrange the laser emitters 60 at the various channels 72, performing in sequence the welding of all the joints between the teeth d.

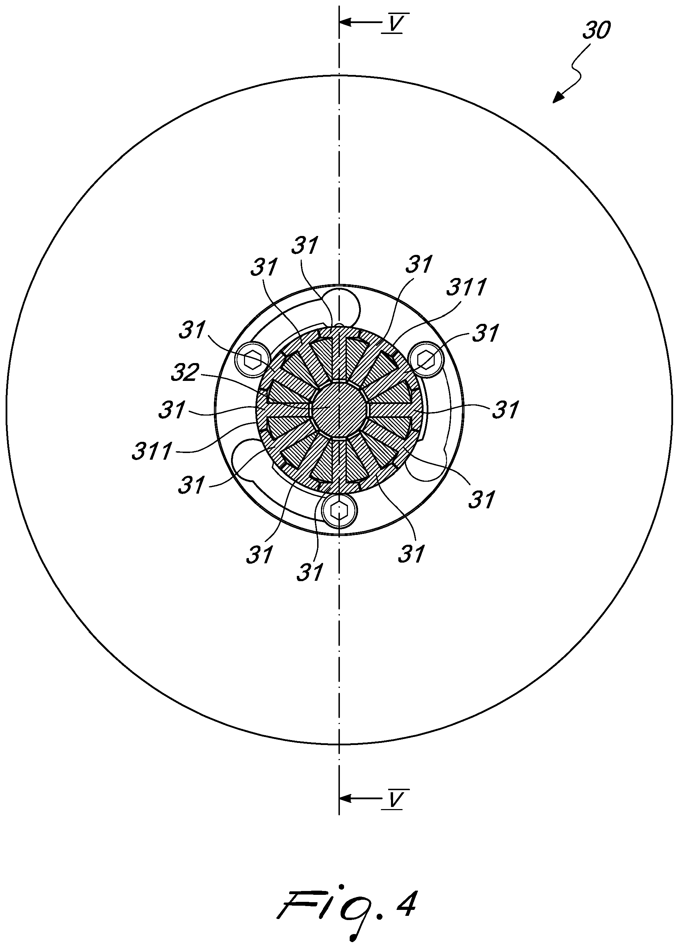

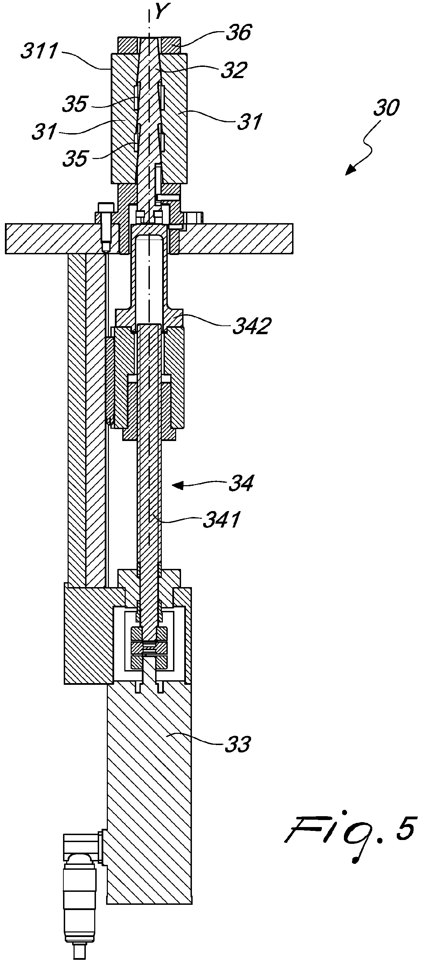

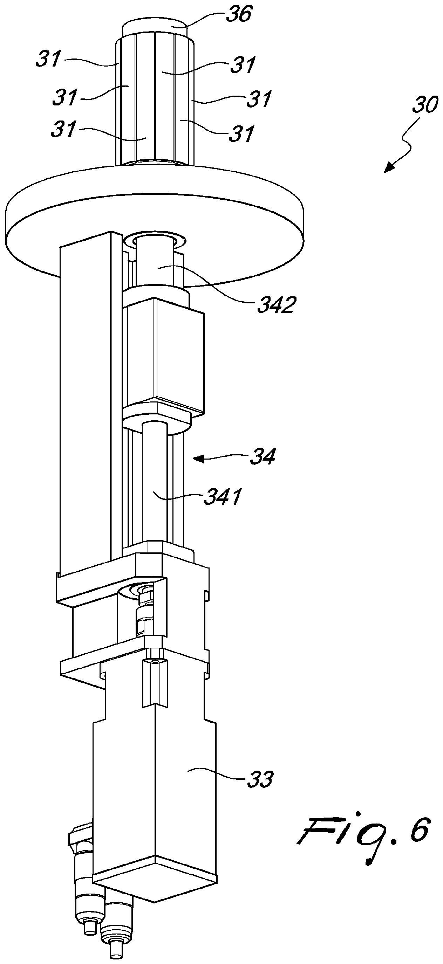

With particular reference to Figures 4, 5 and 6, the radial expansion device 30 that is present in the preferred embodiment of the apparatus 1 is now described in greater detail.

The radial expansion device 30 comprises a central pusher element 32, which is coaxial to the central axis Y and is configured to push radially away from the central axis Y a plurality of pusher sectors 31 arranged circumferentially around the central pusher element 32. More precisely, each one of the pusher sectors 31 is configured to push a single tooth d.

As shown in Figure 4, in which the radial expansion device 30 is seen from above, the pusher sectors 31 are T-shaped in plan view, with the distal wall 311 (i.e., distal with respect to the central pusher element 32) curved. The distal wall 311 is conveniently complementary to the internal wall of the tooth d with which it interfaces.

In the condition in which the radial expansion device 30 is completely retracted, shown in Figure 4, the pusher sectors 31 are moved mutually closer until they substantially match up, so that the distal walls 311 form as a whole the outer wall of a cylinder.

During the expansion, the pusher sectors 31 move mutually apart symmetrically, translating radially so that the distal walls 311 are aligned along circumferences the radius of which increases as expansion proceeds.

As mentioned, the radial translation of the pusher sectors 31 is caused by the mechanical action of the central pusher element 32, which comprises one or more surfaces 35 which are inclined with respect to the axis Y and are configured so as to impart a radial thrust to the pusher sectors 31 when the central pusher element 32 itself moves in a direction along the central axis Y.

In greater detail, in the illustrated example, the central pusher element 32 is provided with two conical surfaces 35 which interface with the internal walls of the pusher elements 31. In this manner, when the central pusher element 32 moves upward, the inclined planes constituted by the conical walls 35 produce a horizontal thrust on the pusher sectors 31, making them move radially. The longitudinal movement of the pusher sectors 31 is instead prevented by a locking element 36.

The movement along the central axis Y of the central pusher element 32 is in turn preferably induced by an actuator 33.

The preferred radial expansion device 30 in fact also comprises an actuator 33 which, by means of a transmission assembly 34, actuates the movement of the central pusher element 32 along the central axis Y.

In greater detail, the transmission assembly 34 comprises a series of motion transmission elements which are mutually connected so that the thrust of the actuator 33 is transmitted to the central pusher element 32, and include, for example, a stem 341, which is actuated by the actuator 43 and is coupled mechanically to a connecting element 342, which in turn is rigidly coupled to the central pusher element 32.

In other possible embodiments, the transmission assembly 34 comprises motion transmission elements of a different type, such as for example threaded shafts, pistons, belts, etc.

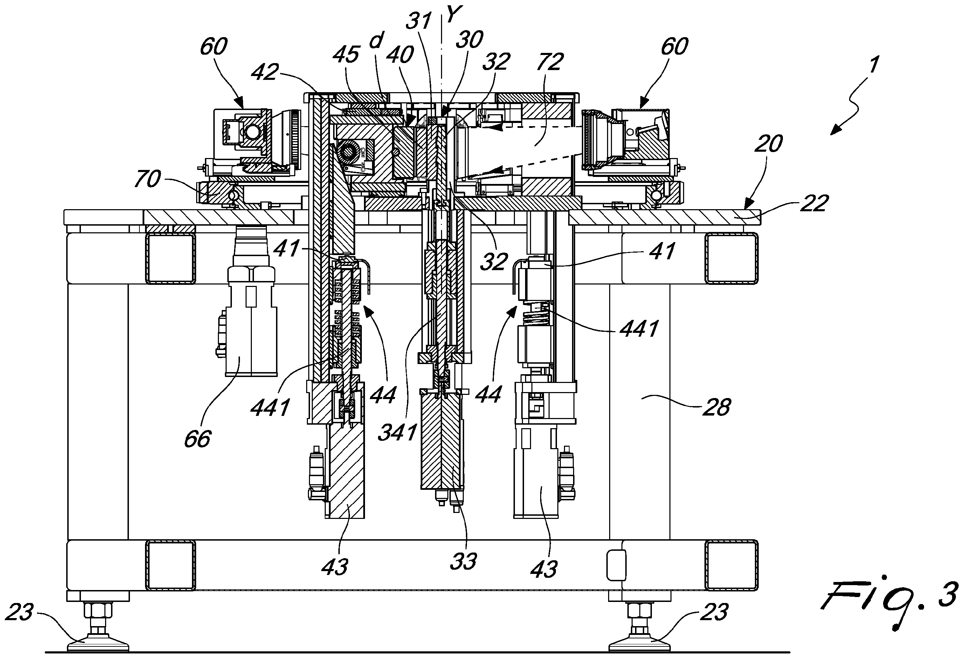

In the preferred and illustrated embodiment, as is evident in Figures 1 and 3, the actuator 33 and all the motion transmission elements 341, 342 are aligned along the central axis Y; however, embodiments are possible in which the actuator 33 has a different position and motion transmission occurs along different axes (for example along a first horizontal axis and then along the central axis Y), according to known kinematic transmission methods.

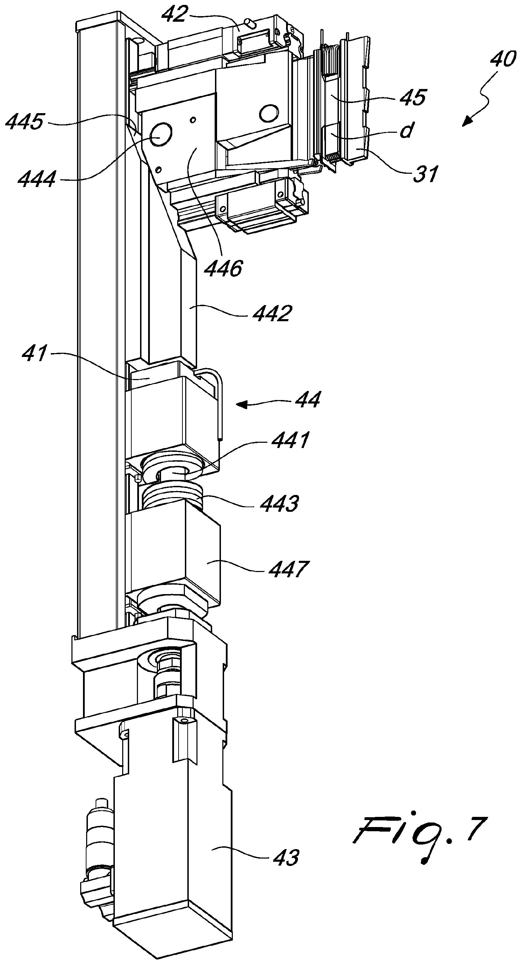

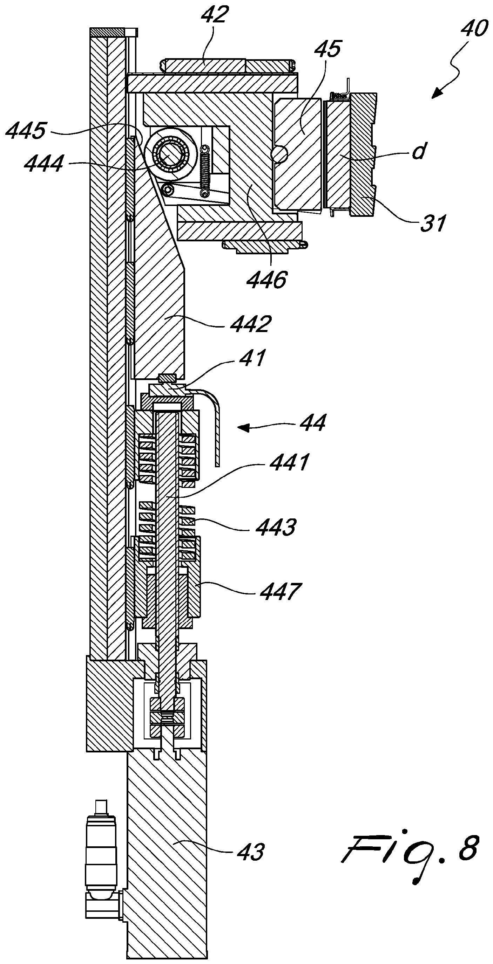

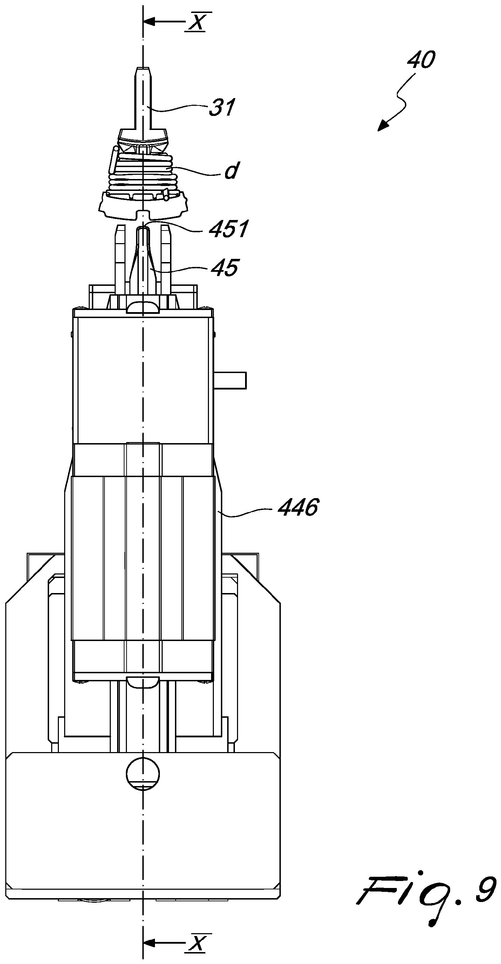

With particular reference to Figures 7, 8 and 9, the radial compression devices 40 that are present in the preferred embodiment of the apparatus 1 are now described in greater detail.

In this embodiment, each radial compression device 40 is configured to push a single tooth d and all the radial compression devices 40 are identical; therefore a single radial compression device 40 is described herein, it being understood that that all the described elements are present in each one of the radial compression devices 40.

Going back to the figures, the radial compression device 40 comprises at least one force detection device 41 for measuring the thrust that said radial compression device 40 applies to the single tooth d; preferably, said force detection device 41 is constituted by a load cell.

Furthermore, the radial compression device 40 comprises at least one position detection device 42 for the direct or indirect detection of the radial distance of the single tooth d from the central axis Y; preferably, the position detection device 42 is a linear encoder capable of detecting movements with respect to a reference position.

The radial compression device 40 also comprises a drive unit 43, which by means of a kinematic chain 44 induces the radial movement, with respect to the central axis Y, of a pusher head 45, which is configured to push the tooth d radially toward the central axis Y.

The pusher head 45 is the element which during thrust makes direct contact with the tooth d, can have any shape according to the requirements and according to the shape of the tooth and, and preferably is provided with an interface surface 451 which is complementary to the surface of the tooth d with which it interfaces.

In greater detail, in the illustrated example, the kinematic chain 44 comprises a pusher shaft 441 which is actuated by the drive unit 43 and is functionally connected to a pusher wedge 442 in order to actuate the linear movement of the latter along a direction that is parallel to the central axis Y. The pusher wedge 442 is in turn kinematically connected to the pusher head 45 so that by moving along such linear direction it imparts to said pusher head 45 a radial thrust toward the central axis Y.

The kinematic connection between the pusher wedge 442 and the pusher head is preferably provided by means of a transmission cylinder 444, which rotates on an inclined plane 445 of the pusher wedge 442, and an intermediate transmission element 446, which kinematically connects the transmission cylinder to the pusher head 45.

Furthermore, the kinematic chain 44 is also provided with a compensation spring 443 which is arranged around the pusher shaft 441 so as to contrast the movement of the latter toward the pusher wedge 442.

Preferably, the pusher shaft 441 comprises a ballscrew 447 which is rotationally actuated by the drive unit 43, converting the rotation imparted thereto by the drive unit 43 into a translation of the pusher shaft 441 along a vertical axis.

In other possible embodiments, the kinematic chain 44 comprises motion transmission elements of a different type, such as for example pistons, gears, belts, etc.

In the preferred and illustrated embodiment, as is evident in Figures 1 and 3, the drive unit 43 is accommodated in the frame 28 below the resting surface 22, the pusher shaft 441 and the pusher wedge 442 move along an axis which is parallel to the central axis Y, at right angles to the direction of motion of the pusher head 45, and therefore motion transmission occurs along two mutually perpendicular axes; however, embodiments are possible in which the drive unit 43 has a different position and motion transmission occurs along different axes (for example along a single horizontal axis, with the drive unit arranged above the resting surface 22), according to known kinematic transmission methods.

Advantageously, the radial compression device 40 is provided so as to have micrometer resolution, i.e., the drive unit 43 is capable of determining movements of the pusher head 45 with a precision on the order of 1 micron.

It should be noted that in this illustrated example the force detection device 41, constituted by a load cell, is interposed between the pusher shaft 441 and the pusher wedge 442.

Also in the illustrated example, the position detection device 42, constituted by a linear encoder, is arranged proximate to the pusher head 45 and is configured to detect the position of the latter. In this manner, the position detection device 42 indirectly detects the position (and more precisely the distance from the central axis Y) of the tooth d by detecting the position of the pusher head 446 that acts on said tooth d.

Both the position detection device 42 and the force detection device 41 are functionally connected to the electronic control unit so as to transmit thereto the acquired data.

The electronic control unit is in fact configured to control the expansion of the radial expansion devices 30 and the expansion of the radial compression devices 40 as a function of the values detected by said position detection device 42 and by such force detection device 41, so as to be able to provide the method that will be described hereinafter.

In practice, in the preferred embodiment, the electronic control unit actuates the expansion of the radial expansion device 30 and the expansion of the radial compression devices 40 by actuating the drive unit 43 and the actuator 33.

The operation of the apparatus 1 is clear and evident from what has been described.

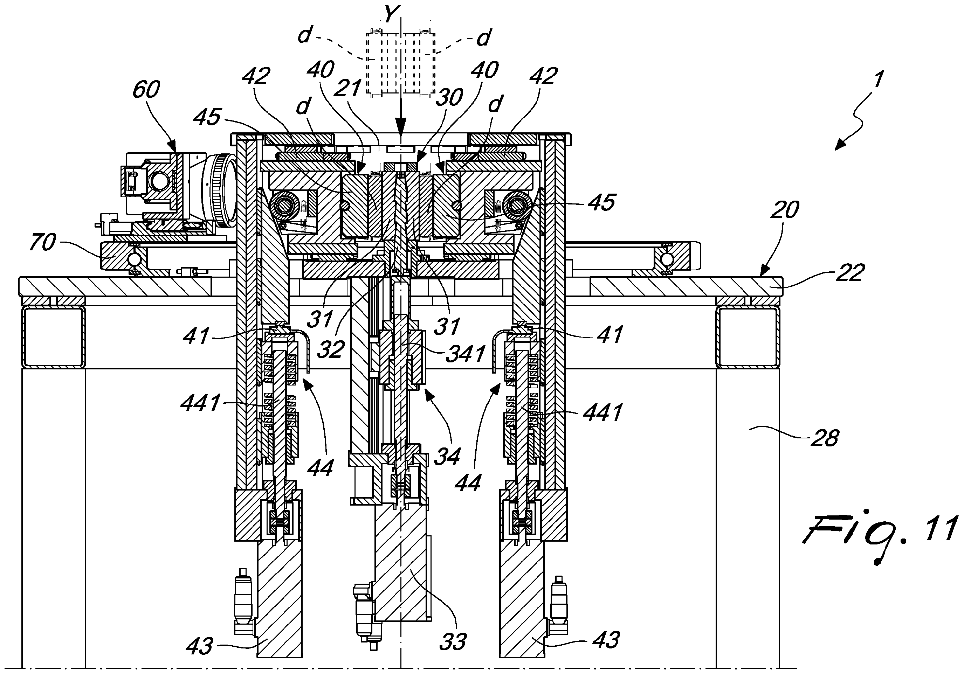

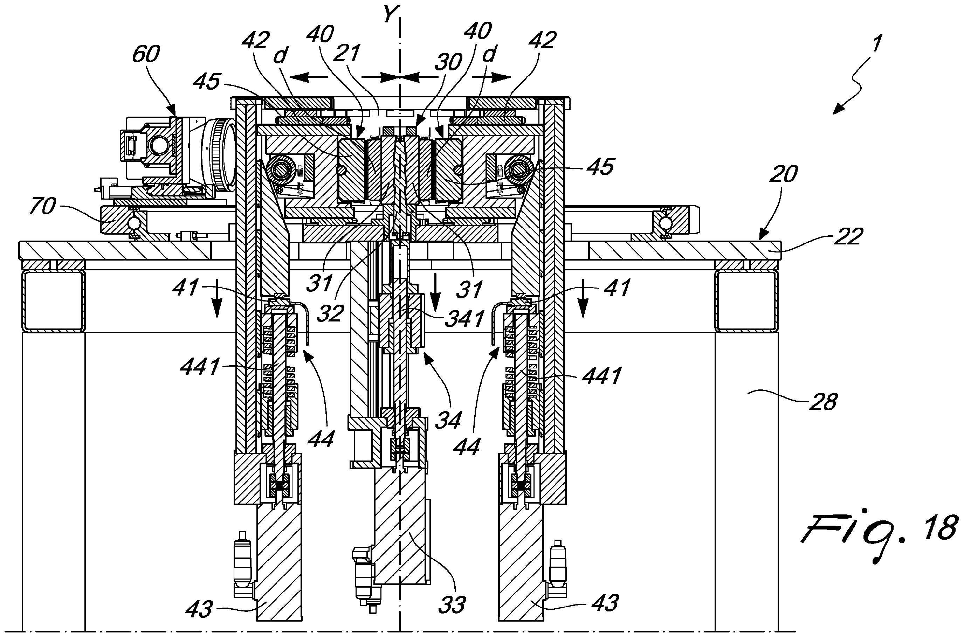

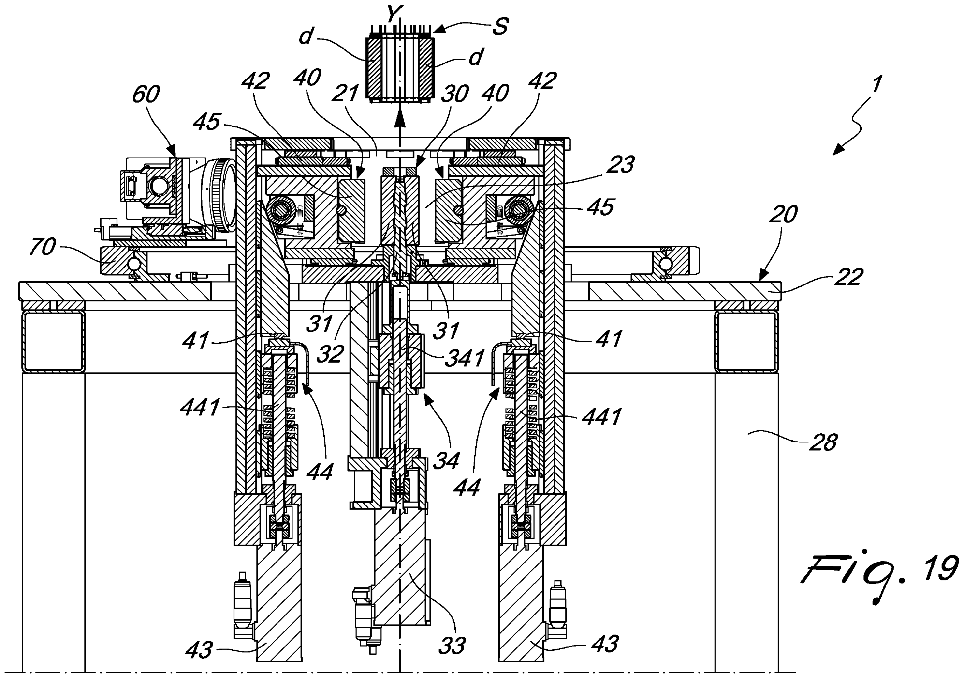

The method for assembling the teeth d according to the invention can be provided by means of the apparatus 1, as illustrated for example in the sequence shown in Figures 11 to 19, and is described hereinafter.

First of all (Figure 11), the teeth d are arranged between the radial expansion device 30 and the radial compression devices 40.

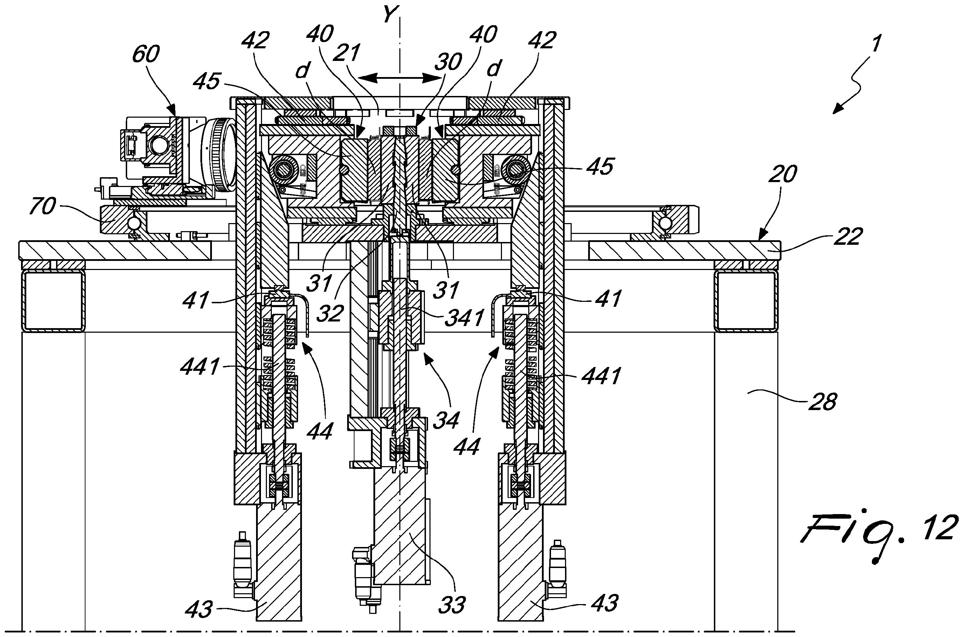

Once the teeth d have been positioned, the method provides for expanding in a coordinated manner the radial expansion device 30 and the radial compression devices 40 until all the teeth d are arranged at the same radial distance from the central axis Y (Figures 12-16). As is already evident, in this step the radial expansion device 30 pushes the teeth d radially away from the central axis Y, while each one of the radial compression devices 40 pushes radially a tooth d toward said central axis Y.

Also in this step, the expansion of the radial expansion device 30 and the expansion of the radial compression devices 40 are coordinated by the electronic control unit as a function at least of the distance of each tooth d from the central axis Y (detected by the position detection devices 42) and of the pressure applied by each one of said radial compression devices 40 to each tooth d (pressures detected by force detection devices 41).

In practice, the radial expansion device 30 and the radial compression devices 40 are actuated alternately, according to an appropriate sequence, under the control of the electronic control unit until the electronic control unit, by interpolating the detections of the force detection devices 41 and of the position detection devices 42, detects that all the teeth d are at the same distance from the central axis Y.

In greater detail, in the preferred embodiment of the method provided by means of the apparatus 1, in this step the following substeps are performed in sequence:
- (Figure 12) the radial expansion device 30 is made to expand up to a predetermined nominal radius;

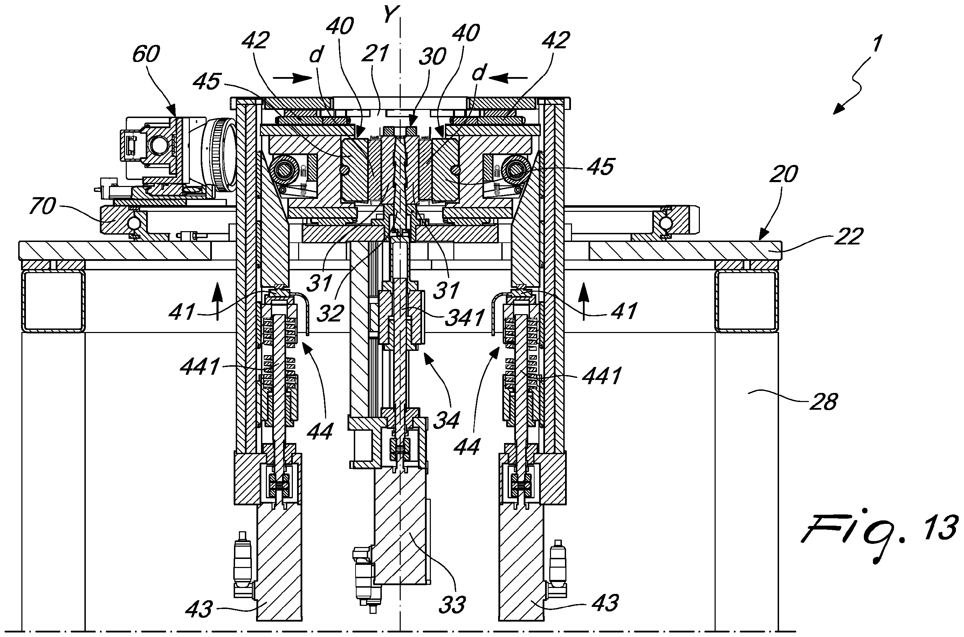

- (Figure 13) the radial compression devices 40 are made to expand in order to keep the teeth d in position;

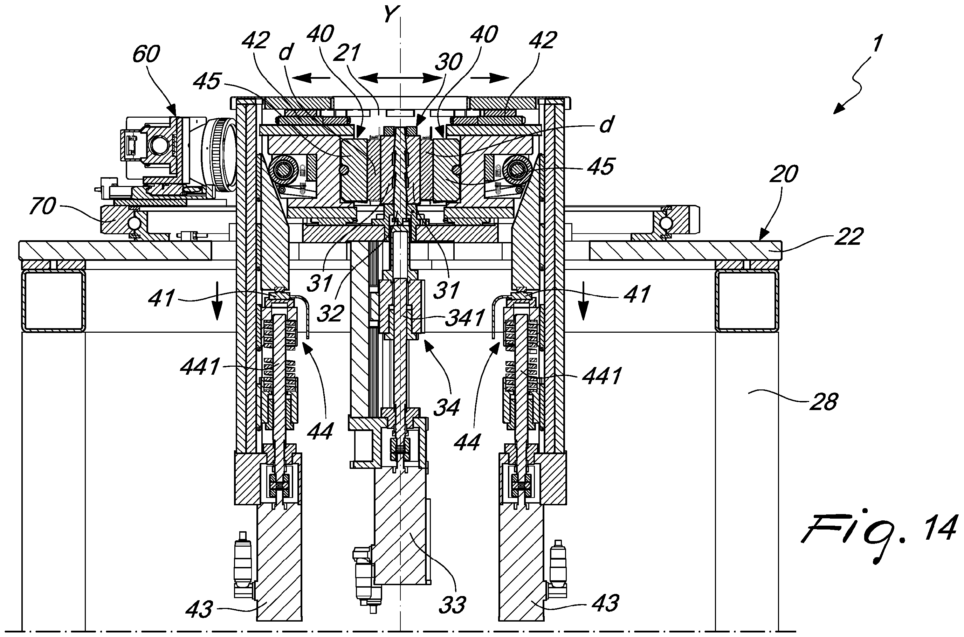

- (Figure 14) the radial expansion device 30 is made to expand so as to mutually space the teeth d and simultaneously the radial compression devices 40 are made to retract in a manner that is proportional to the expansion of the radial expansion device 30;

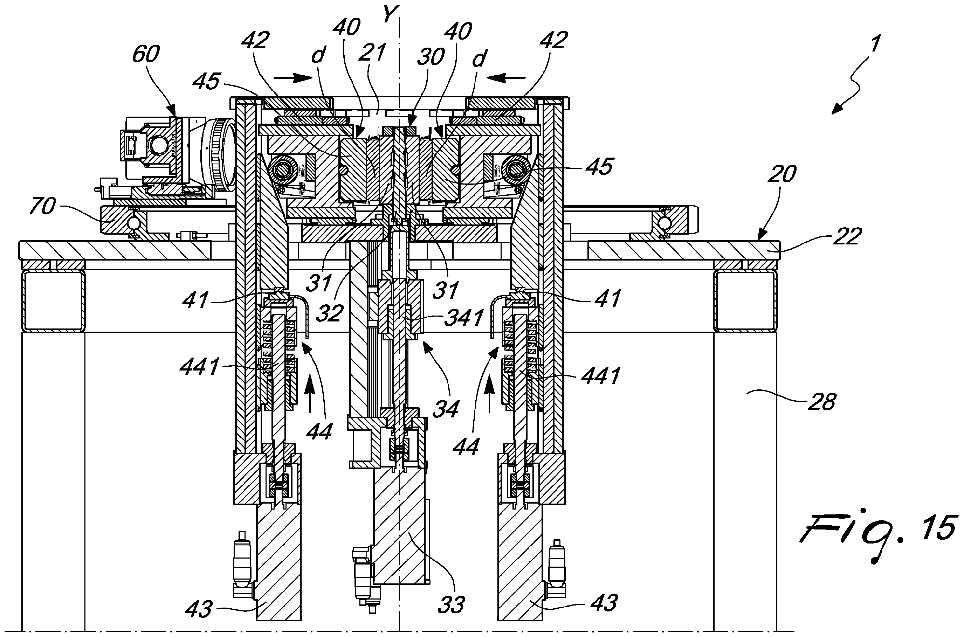

- (Figure 15) each radial compression device 40 is made to expand until it touches a tooth d, detecting that contact has occurred by means of the force detection device 41 (so that a pressure that might deform the tooth is not applied thereto);

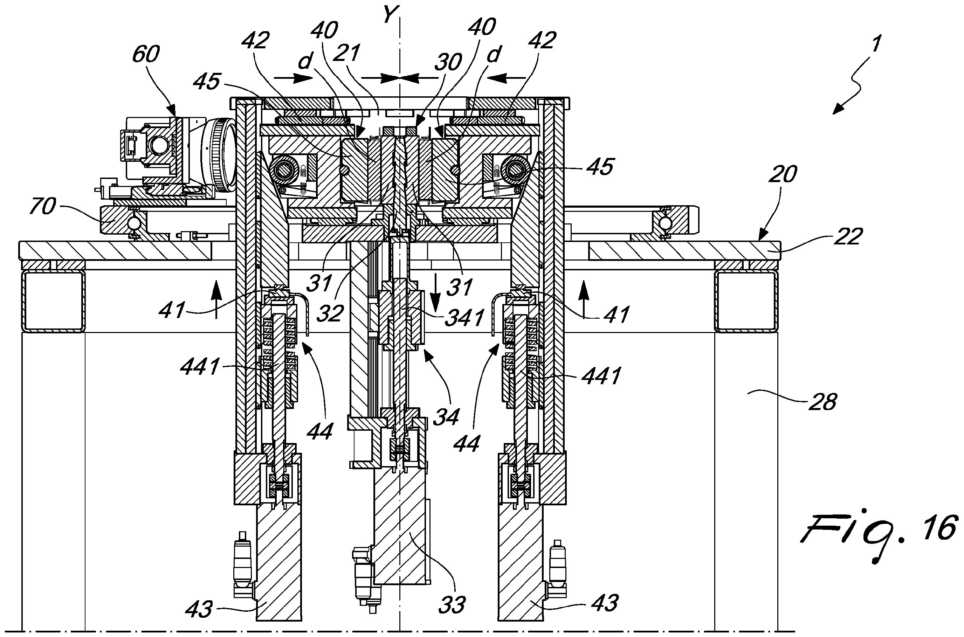

- (Figure 16) the position detection devices 42 are set, defining the position that has just been reached by each radial compression device 40 as the reference position;
- (Figure 16) the radial expansion device 30 is made to retract to said nominal radius and the radial compression devices 40 are made to expand until all the force detection devices 41 detect the same contact value (i.e., up to contact with the teeth d, without causing any deformation thereon);
- (Figure 16) the position variation of each radial compression device 40 with respect to said reference position is detected by means of said position detection devices 42;
- (Figure 16) if in the preceding substep the position variations detected by the position detection devices 42 are not all the same, the radial expansion device 30 is made to expand further and at the same time the radial compression devices 40 are made to retract; then the radial compression devices are made to expand until the force detection devices 41 detect the same contact value and then the preceding substep is repeated. When the position variations detected by the position detection devices 42 are all the same, then one proceeds with the fixing of the teeth d.

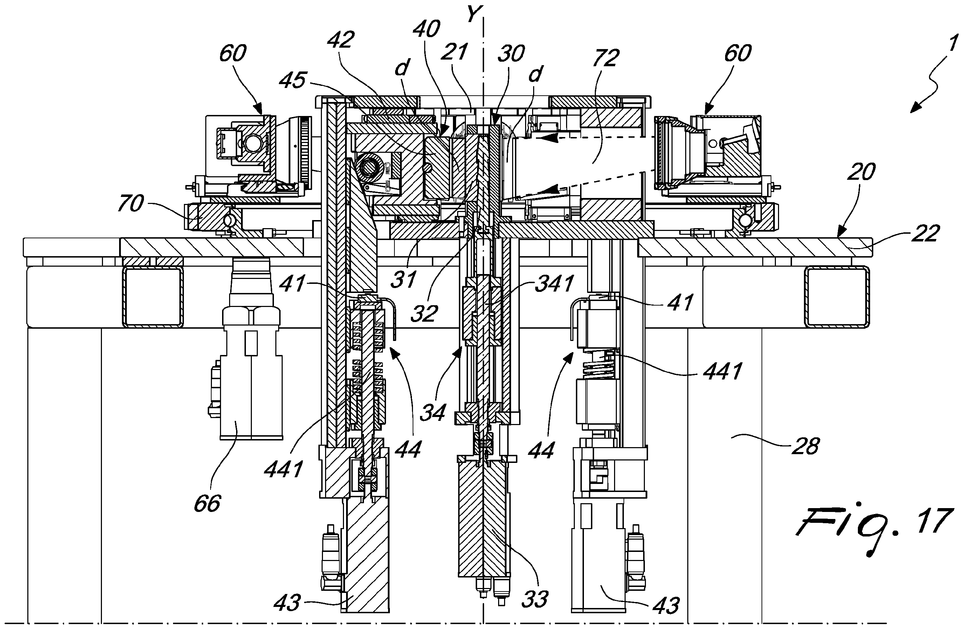

Once the teeth d have all been arranged at the same radial distance from the central axis Y, the teeth d are fixed, preferably by means of laser welding performed by the laser emitters 60, so as to form a single stator element S (Figure 17).

Finally, the stator element S formed by the teeth d is extracted.

It should be noted that the method that has just been described allows to keep the quality of the internal roundness of the stator constantly under control in a process for the serial production of parts.

Furthermore, with reference to the actual inside diameter, ensured by the contact with the pusher sectors 31, the tolerances and any consequent irregularities are shifted toward the outside diameter.

Finally, it is important to stress that the teeth d, differently from the background art, are not subjected to mechanical stresses and therefore are not subjected to deformations after release.

In practice it has been found that the method and apparatus for assembling the teeth that constitute the stator poles of a stator, according to the present invention, achieve the intended aim and objects, since they allow to ensure with higher precision the internal roundness of the stator with respect to the background art.

Another advantage of the method and of the apparatus according to the invention resides in that the teeth are assembled without deforming their material.

A further advantage of the method and of the apparatus according to the invention resides in that they allow to control the correctness of the assembly with a higher reliability than the background art.

The method and the apparatus for assembling the teeth that constitute the stator pole of a stator thus conceived are susceptible of numerous modifications and variations, all of which are within the scope of the appended claims.

All the details may furthermore be replaced with other technically equivalent elements.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for assembling teeth (d) that constitute the stator poles of a stator (S) comprising a supporting structure (20) provided with at least one seat (21) for accommodating teeth (d) during assembly, said seat (21) having a central axis (Y), further comprising:
- a radial expansion device (30), which is arranged at said central axis (Y) and is configured to expand radially with respect to said central axis (Y),
- a plurality of radial compression devices (40), which are arranged substantially radially around said radial expansion device (30) and are configured to expand radially toward said central axis (Y);
said radial expansion device (30) and said radial compression devices (40) forming between them a cavity (23) that is adapted to accommodate said teeth (d) during assembly so that the radial expansion of said radial expansion device (30) pushes each tooth (d) so as to move radially away from said central axis (Y) and the expansion of said radial compression devices (40) pushes radially said teeth (d) toward said central axis (Y),
the expansion of said radial expansion device (30) and the expansion of said radial compression devices (40) being controlled by at least one electronic control unit, **characterised in that**,
each radial compression device (40) is configured to push a single tooth (d) and comprises: a force detection device (41) for measuring the thrust that said radial compression device (40) applies to said single tooth (d), a position detection device (42) for detecting the radial distance of said tooth (d) from said central axis (Y); said electronic control unit being configured to control the expansion of said radial expansion device (30) and the expansion of said radial compression devices (40) as a function of the values detected by said position detection device (42) and by said force detection device (41), and each one of said radial compression devices (40) comprising a drive unit (43) which, by means of a kinematic chain (44), induces the radial movement, with respect to said central axis (Y), of a pusher head (45) which is configured to push radially said tooth (d) toward said central axis (Y); said drive unit (43) being controlled by said electronic control unit, said kinematic chain (44) comprising a pusher shaft (441) which is actuated by said drive unit (43) and is functionally connected to a pusher wedge (442) in order to actuate the linear movement of the latter along a direction that is parallel to said central axis (Y), said pusher wedge (442) being connected kinematically to said pusher head (45) so that by moving along said linear direction it imparts to said pusher head (45) a radial thrust toward said central axis (Y); said force detection device (41) being interposed between said pusher shaft (441) and said pusher wedge (442), said position detection device (42) being configured to detect the position of said pusher head (45), said pusher wedge (442) being connected to said pusher head (45) by means of a transmission cylinder (444) and an intermediate transmission element (446) which kinematically connects said transmission cylinder (444) to said pusher head (45).

2. The apparatus according to claim 1, **characterized in that** said position detection device (42) is a linear encoder and **in that** said force detection device (41) is a load cell.

3. The apparatus (1) according to one or more of claims 1 to 2, **characterized in that** said kinematic chain (44) further comprises:
- a compensation spring (443), which is arranged around said pusher shaft (441) so as to contrast the movement of the latter toward said pusher wedge (442);
- said transmission cylinder (444), which rotates on an inclined plane (445) of said pusher wedge (442) and
- said intermediate transmission element (446), which connects kinematically said transmission cylinder (444) to said pusher head (45);
said pusher shaft (441) comprising a ballscrew (447) which is actuated rotationally by said drive unit (43).

4. The apparatus (1) according to one or more of claims 1 to 3, **characterized in that** said radial expansion device (30) comprises a central pusher element (32), which is coaxial to said central axis (Y) and is configured to push radially away from said central axis (Y) a plurality of pusher sectors (31) which are arranged circumferentially around said central pusher element (32); each one of said pusher sectors (31) being configured to push a single tooth (d).

5. The apparatus (1) according to one or more of claims 1 to 4, **characterized in that** said radial expansion device (30) comprises an actuator (33) which, by means of a transmission assembly (34), actuates the movement of said central pusher element (32) along said central axis (Y); said central pusher element (32) comprising one or more surfaces (35) which are inclined with respect to said central axis (Y) and are configured so as to impart a radial thrust to said pusher sectors (31) when said central pusher element (32) moves in a direction along said central axis (Y).

6. The apparatus (1) according to one or more of claims 1 to 5, **characterized in that** it comprises one or more laser emitters (60) configured to perform laser welding on said teeth (d).

7. The apparatus (1) according to claim 6, **characterized in that** said laser emitters (60) are mounted on a base (70) which can be rotated about the central axis (Y); said laser emitters (60) being arranged externally to the radial compression devices (40) with respect to the central axis (Y).

8. A method for assembling teeth (d) that constitute the stator poles of a stator (S) for electric motors, said method using an apparatus according to claim 1.

## Patentansprüche

1. Eine Vorrichtung (1) zur Montage der Zähne (d), aus denen die Statorpole eines Stators (S) bestehen, eine tragende Struktur (20) umfassend, die mit mindestens einem Sitz (21) für die Aufnahme von Zähnen (d) während der Montage ausgestattet ist, wobei der Sitz (21) eine Mittelachse (Y) hat; weiter Folgendes umfassend:
- eine radiale Expansionsvorrichtung (30), die an der Mittelachse (Y) angeordnet und ausgebildet ist, um sich radial mit Bezug auf die Mittelachse (Y) zu erweitern,
- eine Vielzahl radialer Kompressionsvorrichtungen (40), die im Wesentlichen radial um die radiale Expansionsvorrichtung (30) herum angeordnet und ausgebildet sind, um sich radial zu der Mittelachse (Y) hin zu erweitern;
wobei die radiale Expansionsvorrichtung (30) und die radialen Kompressionsvorrichtungen (40) zwischen sich einen Hohlraum (23) bilden, der ausgebildet ist, um die Zähne (d) während der Montage aufzunehmen, so dass die radiale Expansion der radialen Expansionsvorrichtung (30) jede Zahn (d) radial von der Mittelachse (Y) fort schiebt und die Expansion der radialen Kompressionsvorrichtungen (40) die Zähne (d) radial zu der Mittelachse (Y) hin schiebt,
wobei die Expansion der radialen Expansionsvorrichtung (30) und die Expansion der radialen Kompressionsvorrichtungen (40) von mindestens einer elektronischen Steuereinheit gesteuert werden, **dadurch gekennzeichnet, dass** jede radiale Kompressionsvorrichtung (40) ausgebildet ist, um einen einzelnen Zahn (d) zu schieben, und Folgendes umfasst: eine Kraftmessvorrichtung (41) zur Messung des Schubs, den die radiale Kompressionsvorrichtung (40) auf den einzelnen Zahn (d) ausübt, eine Positionserfassungsvorrichtung (42) zur Erfassung des radialen Abstands des Zahns (d) von der Mittelachse (Y);
wobei die elektronische Steuereinheit ausgebildet ist, um die Expansion der radialen Expansionsvorrichtung (30) und die Expansion der radialen Kompressionsvorrichtungen (40) in Abhängigkeit von den Werten, die von der Positionserfassungsvorrichtung (42) und von der Kraftmessvorrichtung (41) erfasst werden, zu steuern; und wobei jede der radialen Kompressionsvorrichtungen (40) eine Antriebseinheit (43) umfasst, welche über eine kinematische Kette (44) die radiale Bewegung eines Schieberkopfs (45) mit Bezug auf die Mittelachse (Y) auslöst, der ausgebildet ist, um den Zahn (d) radial zu der Mittelachse (Y) hin zu schieben; wobei die Antriebseinheit (43) von der elektronischen Steuereinheit gesteuert wird, wobei die kinematische Kette (44) eine Schieberstange (441) umfasst, welche von der Antriebseinheit (43) angetrieben und funktionell mit einem Schieberkeil (442) verbunden ist, um die Linearbewegung des Letzteren in eine Richtung auszulösen, die parallel zu der Mittelachse (Y) ist; wobei der Schieberkeil (442) kinematisch mit dem Schieberkopf (45) verbunden ist, so dass er durch die Bewegung in die lineare Richtung dem Schieberkopf (45) einen radialen Schub zu der Mittelachse (Y) hin verleiht; wobei die Kraftmessvorrichtung (41) zwischen der Schieberstange (441) und dem Schieberkeil (442) angeordnet ist, wobei die Positionserfassungsvorrichtung (42) ausgebildet ist, um die Position des Schieberkopfs (45) zu erfassen, wobei der Schieberkeil (442) über einen Übertragungszylinder (444) und ein zwischengeschaltetes Übertragungselement (446), das den Übertragungszylinder (444) kinematisch mit dem Schieberkopf (45) verbindet, mit dem Schieberkopf (45) verbunden ist.

2. Die Vorrichtung gemäß Anspruch 1, **dadurch gekennzeichnet, dass** die Positionserfassungsvorrichtung (42) ein Linearcodierer ist, und dadurch, dass die Kraftmessvorrichtung (41) eine Kraftmessdose ist.

3. Die Vorrichtung (1) gemäß einem oder mehreren der Ansprüche 1 bis 2, **dadurch gekennzeichnet, dass** die kinematische Kette (44) weiter Folgendes umfasst:
- eine Ausgleichsfeder (443), die um die Schieberstange (441) angeordnet ist, um der Bewegung Letzterer zu dem Schieberkeil (442) hin entgegenzuwirken;
- den Übertragungszylinder (444), welcher auf einer geneigten Fläche (445) des Schieberkeils (442) rotiert, und
- das zwischengeschaltete Übertragungselement (446), welches den Übertragungszylinder (444) kinematisch mit dem Schieberkopf (45) verbindet;
wobei die Schieberstange (441) eine Kugelumlaufspindel (447) umfasst, die drehend von der Antriebseinheit (43) angetrieben wird.

4. Die Vorrichtung (1) gemäß einem oder mehreren der Ansprüche 1 bis 3,
**dadurch gekennzeichnet, dass**
die radiale Expansionsvorrichtung (30) ein zentrales Schieberelement (32) umfasst, welches koaxial mit der Mittelachse (Y) und ausgebildet ist, um eine Vielzahl von Schiebersektoren (31), die um den Umfang des zentralen Schieberelements (32) herum angeordnet sind, radial von der Mittelachse (Y) fort zu schieben; wobei jeder der Schiebersektoren (31) ausgebildet ist, um einen einzelnen Zahn (d) zu schieben.

5. Die Vorrichtung (1) gemäß einem oder mehreren der Ansprüche 1 bis 4,
**dadurch gekennzeichnet, dass**
die radiale Expansionsvorrichtung (30) ein Antriebselement (33) umfasst, welches über eine Übertragungsanordnung (34) die Bewegung des zentralen Schieberelements (32) entlang der Mittelachse (Y) antreibt; wobei das zentrale Schieberelement (32) eine oder mehrere Oberflächen (35) umfasst, die mit Bezug auf die Mittelachse (Y) schräg und ausgebildet sind, um den Schiebersektoren (31) einen radialen Schub zu verleihen, wenn das zentrale Schieberelement (32) sich in eine Richtung entlang der Mittelachse (Y) bewegt.

6. Die Vorrichtung (1) gemäß einem oder mehreren der Ansprüche 1 bis 5, **dadurch gekennzeichnet, dass** sie einen oder mehrere Laser-Emitter (60) umfasst, die ausgebildet sind, um Laserschweißen an den Zähnen (d) durchzuführen.

7. Die Vorrichtung (1) gemäß Anspruch 6,
**dadurch gekennzeichnet, dass**
die Laser-Emitter (60) an einer Basis (70) montiert sind, die um die Mittelachse (Y) gedreht werden kann; wobei die Laser-Emitter (60) mit Bezug auf die Mittelachse (Y) außerhalb der radialen Kompressionsvorrichtungen (40) angeordnet sind.

8. Ein Verfahren für die Montage der Zähne (d), aus denen die Statorpole eines Stators (S) für Elektromotoren bestehen, wobei das Verfahren eine Vorrichtung gemäß Anspruch 1 verwendet.

## Revendications

1. Appareil (1) pour assembler des dents (d) qui constituent les pôles de stator d'un stator (S) comportant une structure de support (20) pourvue d'au moins un logement (21) pour recevoir des dents (d) pendant l'assemblage, ledit logement (21) ayant un axe central (Y), comportant en outre :
- un dispositif d'expansion radiale (30), qui est agencé sur ledit axe central (Y) et est configuré pour s'expanser radialement par rapport audit axe central (Y),
- une pluralité de dispositifs de compression radiale (40), qui sont agencés de manière sensiblement radiale autour dudit dispositif d'expansion radiale (30) et sont configurés pour s'expanser radialement vers ledit axe central (Y),
ledit dispositif d'expansion radiale (30) et lesdits dispositifs de compression radiale (40) formant entre eux une cavité (23) qui est adaptée pour recevoir lesdites dents (d) pendant l'assemblage de sorte que l'expansion radiale dudit dispositif d'expansion radiale (30) pousse chaque dent (d) de manière à se déplacer radialement en s'éloignant dudit axe central (Y) et l'expansion desdits dispositifs de compression radiale (40) pousse radialement lesdites dents (d) vers ledit axe central (Y),
l'expansion dudit dispositif d'expansion radiale (30) et l'expansion desdits dispositifs de compression radiale (40) étant commandées par au moins une unité de commande électronique,
**caractérisé en ce que**,
chaque dispositif de compression radiale (40) est configuré pour pousser une seule dent (d) et comporte : un dispositif de détection de force (41) pour mesurer la poussée que ledit dispositif de compression radiale (40) applique sur ladite seule dent (d), un dispositif de détection de position (42) pour détecter la distance radiale de ladite dent (d) par rapport audit axe central (Y), ladite unité de commande électronique étant configurée pour commander l'expansion dudit dispositif d'expansion radiale (30) et l'expansion desdits dispositifs de compression radiale (40) en fonction des valeurs détectées par ledit dispositif de détection de position (42) et par ledit dispositif de détection de force (41), et chacun desdits dispositifs de compression radiale (40) comportant une unité d'entraînement (43) qui, au moyen d'une chaîne cinématique (44), induit le mouvement radial, par rapport audit axe central (Y), d'une tête de poussée (45) qui est configurée pour pousser radialement ladite dent (d) vers ledit axe central (Y), ladite unité d'entraînement (43) étant commandée par ladite unité de commande électronique, ladite chaîne cinématique (44) comportant une tige de poussée (441) qui est actionnée par ladite unité d'entraînement (43) et est fonctionnellement reliée à un coin de poussée (442) afin d'actionner le mouvement linéaire de ce dernier le long d'une direction qui est parallèle audit axe central (Y), ledit coin de poussée (442) étant relié cinématiquement à ladite tête de poussée (45) de sorte qu'en se déplaçant le long de ladite direction linéaire, il imprime à ladite tête de poussée (45) une poussée radiale vers ledit axe central (Y), ledit dispositif de détection de force (41) étant intercalé entre ladite tige de poussée (441) et ledit coin de poussée (442), ledit dispositif de détection de position (42) étant configuré pour détecter la position de ladite tête de poussée (45), ledit coin de poussée (442) étant relié à ladite tête de poussée (45) au moyen d'un cylindre de transmission (444) et d'un élément de transmission intermédiaire (446) qui relie cinématiquement ledit cylindre de transmission (444) à ladite tête de poussée (45) .

2. Appareil selon la revendication 1, **caractérisé en ce que** ledit dispositif de détection de position (42) est un codeur linéaire et **en ce que** ledit dispositif de détection de force (41) est une cellule de charge.

3. Appareil (1) selon une ou plusieurs des revendications 1 à 2, **caractérisé en ce que** ladite chaîne cinématique (44) comporte en outre :
- un ressort de compensation (443), qui est agencé autour de ladite tige de poussée (441) de manière à s'opposer au mouvement de ce dernier vers ledit coin de poussée (442),
- ledit cylindre de transmission (444), qui tourne sur un plan incliné (445) dudit coin de poussée (442) et
- ledit élément de transmission intermédiaire (446), qui relie cinématiquement ledit cylindre de transmission (444) à ladite tête de poussée (45),
ladite tige de poussée (441) comportant une vis à billes (447) qui est actionnée en rotation par ladite unité d'entraînement (43).

4. Appareil (1) selon une ou plusieurs des revendications 1 à 3, **caractérisé en ce que** ledit dispositif d'expansion radiale (30) comporte un élément de poussée central (32), qui est coaxial audit axe central (Y) et est configuré pour pousser radialement en éloignant dudit axe central (Y) une pluralité de secteurs de poussée (31) qui sont agencés de manière circonférentielle autour dudit élément de poussée central (32), chacun desdits secteurs de poussée (31) étant configuré pour pousser une seule dent (d).

5. Appareil (1) selon une ou plusieurs des revendications 1 à 4, **caractérisé en ce que** ledit dispositif d'expansion radiale (30) comporte un actionneur (33) qui, au moyen d'un ensemble de transmission (34), actionne le mouvement dudit élément de poussée central (32) le long dudit axe central (Y), ledit élément de poussée central (32) comportant une ou plusieurs surfaces (35) qui sont inclinées par rapport audit axe central (Y) et sont configurées de manière à imprimer une poussée radiale auxdits secteurs de poussée (31) lorsque ledit élément de poussée central (32) se déplace dans une direction le long dudit axe central (Y).

6. Appareil (1) selon une ou plusieurs des revendications 1 à 5, **caractérisé en ce qu'**il comporte un ou plusieurs émetteurs laser (60) configurés pour réaliser un soudage au laser sur lesdites dents (d).

7. Appareil (1) selon la revendication 6, **caractérisé en ce que** lesdits émetteurs laser (60) sont montés sur une base (70) qui peut tourner autour de l'axe central (Y), lesdits émetteurs laser (60) étant agencés extérieurement aux dispositifs de compression radiale (40) par rapport à l'axe central (Y).

8. Procédé pour assembler des dents (d) qui constituent les pôles de stator d'un stator (S) pour des moteurs électriques, ledit procédé utilisant un appareil selon la revendication 1.
